# EUROPÄISCHE PATENTSCHRIFT

(11) **EP 2 425 150 B1**
(45) Veröffentlichungstag und Bekanntmachung des Hinweises auf die Patenterteilung: **06.11.2013**
(21) Anmeldenummer: 10714190.5
(22) Anmeldetag: 10.04.2010
(51) Int. Cl.: F16G 3/16

(54) **VORRICHTUNG ZUM VERBINDEN VON WENIGSTENS ZWEI GURTEN**
DEVICE FOR CONNECTING AT LEAST TWO BELTS
DISPOSITIF D'ASSEMBLAGE D'AU MOINS DEUX COURROIES

(30) Priorität: 29.04.2009 DE 102009019382
(43) Veröffentlichungstag der Anmeldung: 07.03.2012
(73) Patentinhaber: A. Raymond et Cie., 38000 Grenoble (FR)
(72) Erfinder: BÜSCH, Martin, 79588 Efringen-Kirchen (DE); RISY, Jan-Christian, 79589 Binzen (DE); SILBEREISEN, Friedrich, 79588 Efringen-Kirchen (DE); BURG, Patrice, F-68440 Steinbrunn-le-Bas (FR)
(74) Vertreter: RACKETTE Partnerschaft Patentanwälte
(86) Internationale Anmeldenummer: PCT/EP2010/002234
(87) Internationale Veröffentlichungsnummer: WO 2010/124790

(56) Entgegenhaltungen:
- DE-A1- 3 238 266
- DE-A1- 4 417 668
- US-A- 2 069 362
- US-A- 2 404 041

## Beschreibung

Die Erfindung betrifft eine Vorrichtung zum Verbinden von wenigstens zwei Gurten gemäß dem Oberbegriff des Patentanspruches 1.

Aus DE 32 38 266 A1 ist eine Vorrichtung zum Verbinden von wenigstens zwei Gurten bekannt, die eine Bodenplatte aufweist, auf die die zum Verbinden an ihren Endseiten angeschrägten Gurte auflegbar sind.

Aus US 2008/0060171 A1 ist eine Vorrichtung zum Verbinden von zwei Gurten bekannt, die über zwei U-förmige Klemmteile verfügt. Die Klemmteile sind über eine Schraube miteinander verbindbar, wobei bei Herstellen dieser Verbindung zwischen die Klemmteile eingelegte Enden von zwei Gurten unter Verklemmung miteinander verbunden sind.

Der Erfindung liegt die Aufgabe zugrunde, eine Vorrichtung zum Verbinden von zwei Gurten der eingangs genannten Art anzugeben, die sich bei einer kostengünstigen Herstellung sowie einfachen Handhabung durch ein zuverlässiges Verbinden von Enden der Gurte auszeichnet.

Diese Aufgabe wird bei einer Vorrichtung zum Verbinden von wenigstens zwei Gurten der eingangs genannten Art mit den kennzeichnenden Merkmalen des Patentanspruches 1 gelöst.

Dadurch, dass bei der erfindungsgemäßen Vorrichtung lediglich ein einziges und damit zu einer kostengünstigen Vorrichtung führendes Teil vorhanden ist, in das die Gurte unter Eingriff der Anbindungsstege in die Fixierausnehmungen und unter Festlegen durch die Niederhaltemittel einfügbar sind, lassen sich die Gurte mit wenigen, einfach durchzuführenden Handgriffen zuverlässig miteinander verbinden.

Weitere zweckmäßige Ausgestaltungen der Erfindung sind Gegenstand der Unteransprüche.

Weitere zweckmäßige Ausgestaltungen und Vorteile der Erfindung ergeben sich aus der nachfolgenden Beschreibung von Ausführungsbeispielen der Erfindung mit Bezug auf die Figuren der Zeichnung.

Es zeigen:
- Fig. 1: in einer perspektivischen Ansicht ein erstes Ausführungsbeispiel einer erfindungsgemäßen Vorrichtung zum Verbinden von zwei Gurten,
- Fig. 2: in einer perspektivischen Ansicht das erste Ausführungsbeispiel gemäß Fig. 1 mit bestimmungsgemäß eingefügten Enden von zwei Gurten,
- Fig. 3: in einer perspektivischen Ansicht ein zweites Ausführungsbeispiel einer erfindungsgemäßen Vorrichtung zum Verbinden von maximal vier Gurten,
- Fig. 4: in einer perspektivischen Ansicht das zweite Ausführungsbeispiel gemäß Fig. 3 mit zwei auf einer Seite eingefügten Enden von Gurten und
- Fig. 5: in einer perspektivischen Ansicht das zweite Ausführungsbeispiel gemäß Fig. 3 mit vier eingefügten Enden von Gurten.

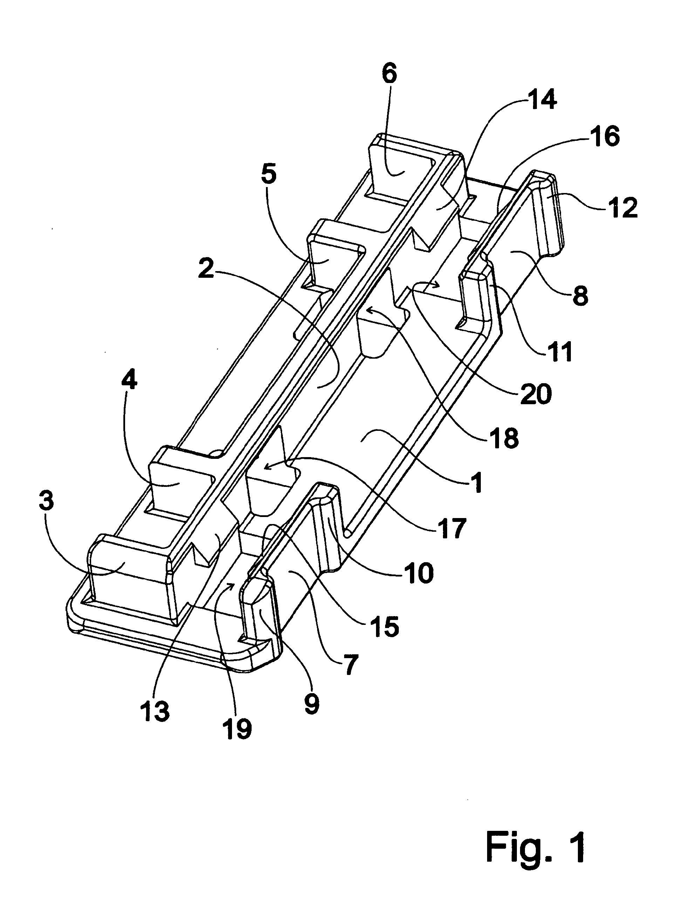

Fig. 1 zeigt in einer perspektivischen Ansicht ein erstes Ausführungsbeispiel einer erfindungsgemäßen Vorrichtung. Das Ausführungsbeispiel gemäß Fig. 1 ist aus einem hartelastischem Kunststoff hergestellt und weist eine bei diesem Ausführungsbeispiel rechteckige Bodenplatte 1 auf, an der auf einer Seite eine einzige sich in Längsrichtung der Bodenplatte 1 erstreckende und rechtwinklig von der Bodenplatte 1 erhabene Längswand 2 angeformt ist. Bei diesem Ausführungsbeispiel ist die Längswand 2 im Wesentlichen mittig auf der Bodenplatte 1 angeordnet.

Bei der Vorrichtung gemäß Fig. 1 sind weiterhin eine Anzahl von Längswandversteifungsrippen 3, 4, 5, 6 ausgebildet, die sich auf einer Seite der Längswand 2 in Querrichtung der Bodenplatte 1 im Wesentlichen bis zum Rande der Bodenplatte 1 erstrecken. Bei diesem Ausführungsbeispiel sind jeweils eine Längswandversteifungsrippe 3, 6 an den einander gegenüberliegenden Enden der Längswand 2 angeordnet, während die beiden anderen Längswandversteifungsrippen 4, 5 in einem jeweils gleichen Abstand von den endseitigen Längswandversteifungsrippen 3, 6 in Richtung der Mitte der Längswand 2 versetzt liegen.

Auf der den Längswandversteifungsrippen 3, 4, 5, 6 abgewandten Seite der Längswand 2 weist die erfindungsgemäße Vorrichtung gemäß Fig. 1 endseitig an einer Längsseite der Bodenplatte 1 angeordnete Randwände 7, 8 auf, die in einem Abstand in Querrichtung der Bodenplatte 1 von der Längswand 2 angeordnet sind. Die Randwände 7, 8 sind jeweils über zwei endseitig angeordnete Randwandversteifungsrippen 9, 10, 11, 12 von der Längswand 2 wegweisend abgestrebt, um die Biegesteifigkeit der Randwände 7, 8 zu erhöhen. Wie aus der Darstellung gemäß Fig. 1 ersichtlich ist, erstrecken sich die Randwände 7, 8 im Wesentlichen über die endseitigen Abschnitte der Längswand 2, die durch die Längswandversteifungsrippen 3, 4, 5, 6 ebenfalls versteift sind.

Aus Fig. 1 ist ersichtlich, dass an den aufeinander zu weisenden Seiten der Längswand 2 und der Randwände 7, 8 in dadurch gebildeten U-förmigen Aufnahmebereichen zwischen den Längswandversteifungsrippen 3, 4, 5, 6 bzw. zwischen den Randwandversteifungsrippen 9, 10, 11, 12 jeweils eine Niederhaltenase 13, 14, 15, 16 als Niederhaltemittel ausgebildet sind, die jeweils auf ihrer der Bodenplatte 1 zugewandten Seite eine parallel zu der Bodenplatte 1 ausgerichtete Anschlagseite und auf der der Bodenplatte 1 abgewandten Seite eine angeschrägte Einführseite aufweisen.

Schließlich ist aus Fig. 1 ersichtlich, dass bei diesem Ausführungsbeispiel in der Längswand 2 zwischen den innenseitig liegenden Längswandversteifungsrippen 4, 5 bei diesem Ausführungsbeispiel unmittelbar an diese Längswandversteifungsrippen 4, 5 angrenzend jeweils eine Fixierausnehmung 17, 18 ausgebildet ist, die die Längswand 2 durchbricht.

In den zwischen den aufeinander zu weisenden Seiten der Längswand 2 und der Randwände 7, 8 liegenden Aufnahmebereichen weist die Bodenplatte 1 aus entformungstechnischen Gründen jeweils eine Schieberausnehmung 19, 20 auf, um die Niederhaltenase 13, 14, 15, 16 zu entformen.

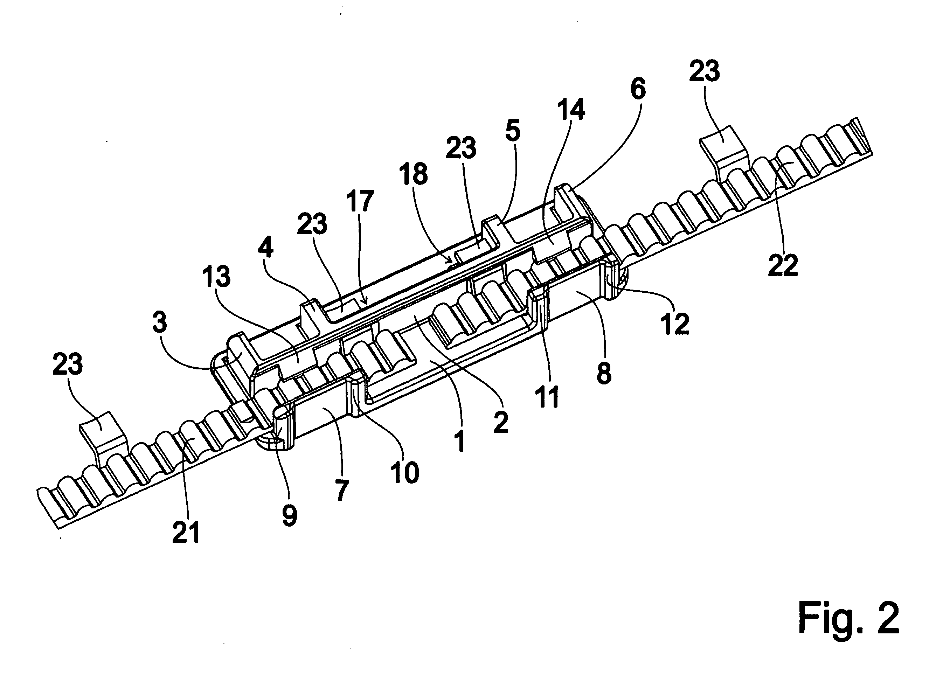

Fig. 2 zeigt in einer perspektivischen Ansicht das Ausführungsbeispiel einer erfindungsgemäßen Vorrichtung gemäß Fig. 1 mit zwei Gurten 21, 22, die mit regelmäßig beabstandeten, sich quer zu den Gurten 21, 22 erstreckenden Anbindungsstegen 23 ausgebildet sind. An den Anbindungsstegen 23 sind beziehungsweise waren in Fig. 1 nicht dargestellte Teile angebracht, die mit dem typischerweise mit einer Zahnstruktur ausgebildeten Gurten 21, 22 transportiert werden beziehungsweise worden sind. Bei derartigen Manipulationen ist es mitunter erforderlich, Enden von Gurten 21, 22 mit einander zu verbinden.

Hierzu sind bei einem diesbezüglichen bestimmungsgemäßen Einsatz der erfindungsgemäßen Vorrichtung die Enden der Gurte 21, 22 so zwischen die Längswand 2 und die Randwände 7, 8 eingefügt, dass ein Anbindungssteg 23 eines Gurtes 21, 22 in jeweils eine Fixierausnehmung 17, 18 eingreift und die Gurte 21, 22 nach Eindrücken zwischen die Niederhaltenasen 13, 14, 15, 16 zwischen der Bodenplatte 1 und den der Bodenplatte 1 zugewandten Anschlagseiten der Niederhaltenasen 13, 14, 15, 16 angeordnet sind. Damit sind die Gurte 21, 22 sowohl gegen Verschieben in Längsrichtung als auch gegen ein unbeabsichtigtes Bewegen von der Bodenplatte 1 weg gesichert.

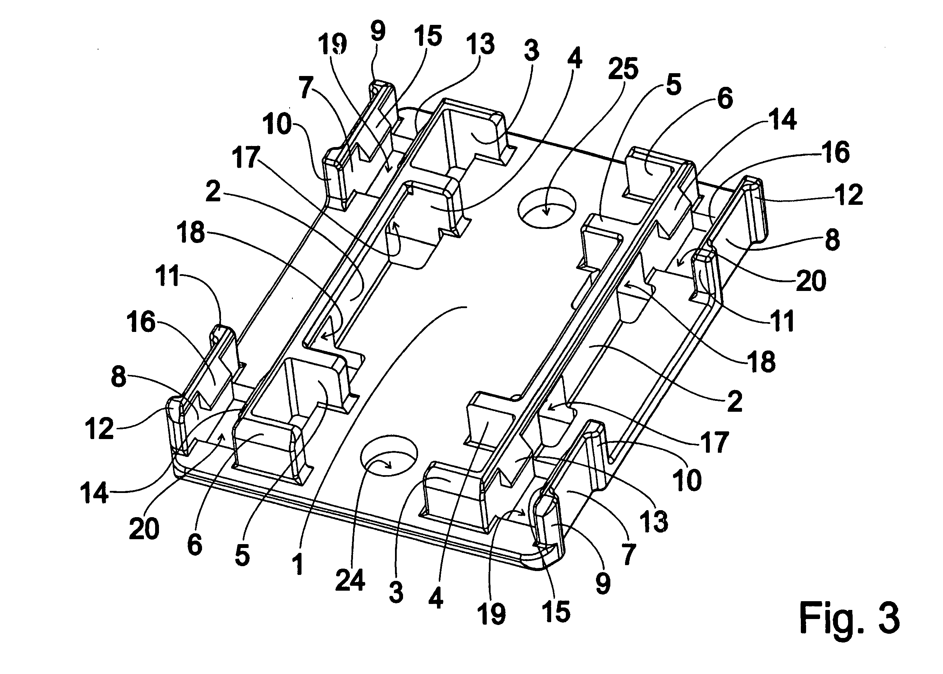

Fig. 3 zeigt in einer perspektivischen Ansicht ein zweites Ausführungsbeispiel einer erfindungsgemäßen Vorrichtung, die im Wesentlichen bei einer gegenüber dem Ausführungsbeispiel gemäß Fig. 1 vergrößerten, in etwa quadratischen Bodenplatte 1 mit dem gleichen sowie entsprechend angeordneten, in ihrer Anzahl jedoch verdoppelten Aufbauten wie das Ausführungsbeispiel gemäß Fig. 1 ausgestattet ist, wobei die Randwandversteifungsrippen 9, 10, 11, 12 einander gegenüberliegend angeordnet sind. Dadurch ist das Ausführungsbeispiel gemäß Fig. 3 mit vier durch die beiden Längswände 2 und die insgesamt vier Randwände 7, 8 gebildeten Aufnahmebereichen ausgebildet.

Die Bodenplatte 1 bei dem Ausführungsbeispiel gemäß Fig. 3 ist weiterhin mit einer Anzahl von Befestigungsausnehmungen 24, 25 ausgebildet, um die Bodenplatte 1 beispielsweise mit einer Schraube oder einer Niet an einem in Fig. 3 nicht dargestellten Trägerteil wie einer Gurttrommel zum Bevorraten der Gurte 21, 22 insbesondere mit daran angebrachten Teilen anzubringen.

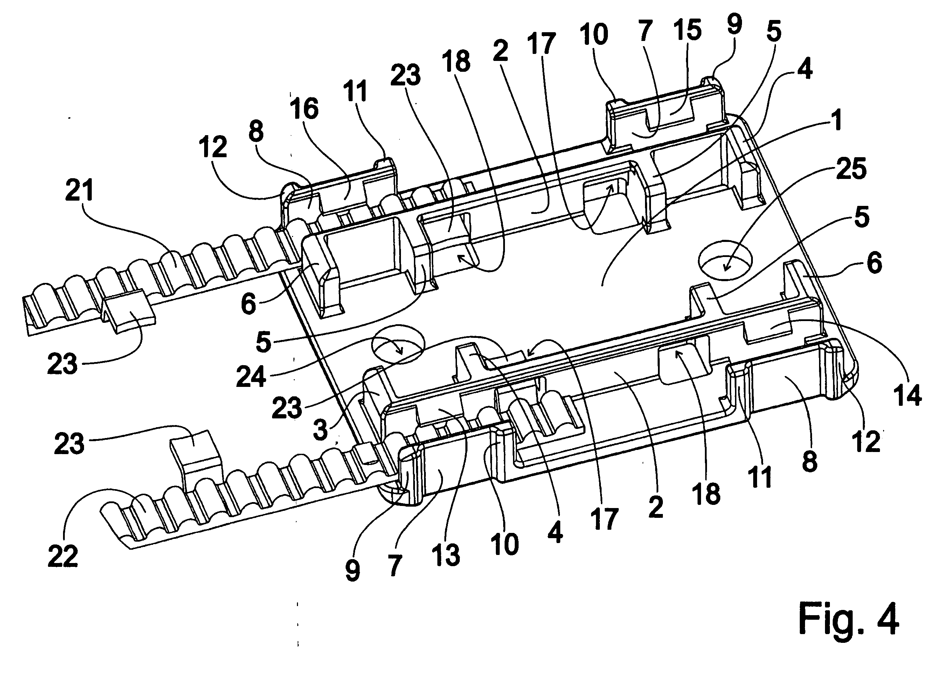

Fig. 4 zeigt in einer perspektivischen Ansicht das Ausführungsbeispiel gemäß Fig. 3 mit zwei Gurten 21, 22, die entsprechend den in Fig. 2 dargestellten Gurten 21, 22 mit Anbindungsstegen 23 ausgebildet sind. In der Anordnung gemäß Fig. 4 sind die Gurte 21, 22 zwischen die an verschiedenen Randseiten der Bodenplatte 1 liegenden Randwände 7, 8 eingefügt, so dass sie sich auf einer Seite von der erfindungsgemäßen Vorrichtung weg erstrecken. Entsprechend der Anordnung gemäß Fig. 2 ist jeweils ein Anbindungssteg 23 in einer Fixierausnehmung 17, 18 angeordnet, um über die Niederhaltenasen 13, 14, 15, 16 die Gurte 21, 22 in einer der Bodenplatte 1 benachbarten Anordnung halten.

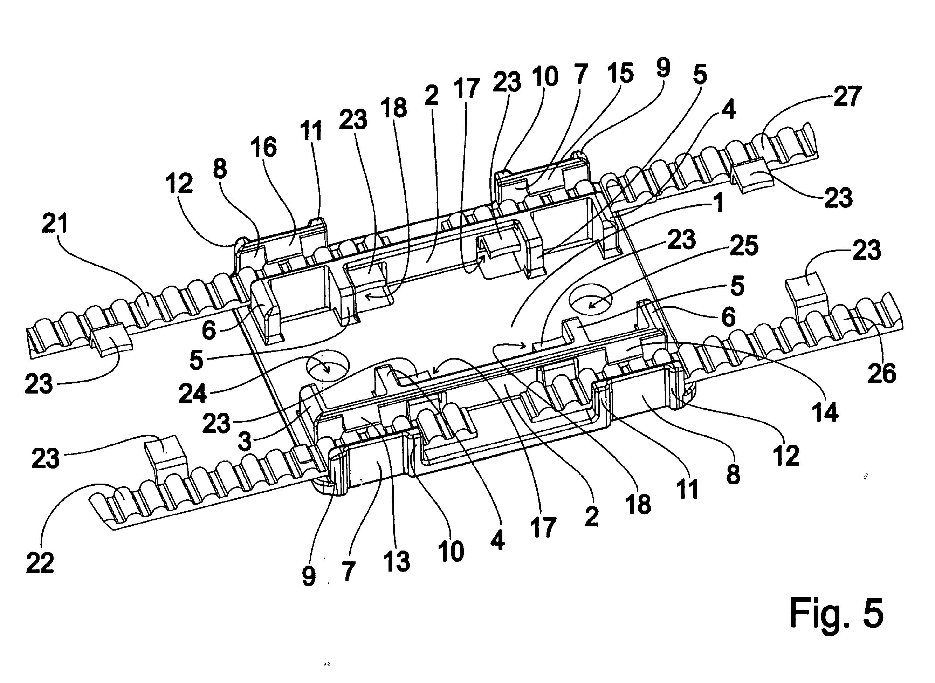

Fig. 5 zeigt in einer perspektivischen Ansicht das Ausführungsbeispiel einer erfindungsgemäßen Vorrichtung gemäß Fig. 3 mit nunmehr vier Gurten 21, 22, 26, 27, deren Enden entsprechend den Anordnungen gemäß Fig. 2 und gemäß Fig. 4 in die durch die aufeinander zu weisenden Seiten der Längswände 2 und der Randwände 7, 8 gebildeten vier Aufnahmebereiche eingefügt sind. Auf diese Art und Weise sind nunmehr zwei Paare von jeweils parallel zueinander ausgerichteten Gurten 21, 22, 26, 27 miteinander verbindbar.

## Patentansprüche

1. Vorrichtung zum Verbinden von wenigstens zwei Gurten (21, 22, 26, 27), die mit quer ausgerichteten Anbindugsstegen (23) ausgebildet sind, mit einer Bodenplatte (1), die wenigstens eine sich in einer Längsrichtung erstreckende und über die Bodenplatte (1) erhabene Längswand (2) sowie wenigstens eine der oder jeder Längswand (2) gegenüberliegende, über die Bodenplatte (1) erhabene Randwand (7 8) trägt, **dadurch gekennzeichnet, dass** wenigstens eine Fixierausnehmung (17, 18), die im Betrieb wenigstens einen Anbindungssteg (23) aufnimmt, ausgebildet ist, die in die oder eine Längswand (2) und/oder in die oder eine Randwand (7, 8) eingebracht ist, und wobei an der oder jeder Längswand (2) und/oder an der oder jeder Randwand (7, 8) Niederhaltemittel (13, 14, 15, 16) zum Fixieren eines Gurtes (21, 22, 26, 27) ausgebildet sind.

2. Vorrichtung nach Anspruch 1, **dadurch gekennzeichnet, dass** die Niederhaltemittel eine Anzahl von Niederhaltenasen (13, 14, 15, 16) aufweisen, die zwischen der oder jeder Längswand (2) und der oder jeder der betreffenden Längswand (2) gegenüberliegenden Randwand (7, 8) ausgebildet sind.

3. Vorrichtung nach Anspruch 1 oder nach Anspruch 2, **dadurch gekennzeichnet, dass** auf der oder jeder Randwand (7, 8) abgewandten Seite der oder jeder Längswand (2) wenigstens eine Längswandversteifungsrippe (3, 4, 5, 6) ausgebildet ist.

4. Vorrichtung nach einem der Ansprüche 1 bis 3, dass an der oder jeder Randwand (7, 8) auf der der gegenüber liegenden Längswand (2) abgewandten Seite wenigstens eine Randwandversteifungsrippe (9, 10, 11, 12) ausgebildet ist.

5. Vorrichtung nach einem der Ansprüche 1 bis 4, **dadurch gekennzeichnet, dass** eine einzige Längswand (2) ausgebildet ist, die mittig auf der Bodenplatte (1) angeordnet ist.

6. Vorrichtung nach einem der Ansprüche 1 bis 4, **dadurch gekennzeichnet, dass** zwei parallel zueinander ausgerichtete Längswände (2) ausgebildet sind.

7. Vorrichtung nach Anspruch 5 oder Anspruch 6, **dadurch gekennzeichnet, dass** in einem Abstand in Querrichtung der Bodenplatte (1) von der oder jeder Längswand (2) jeweils eine Randwand (7, 8) ausgebildet ist.

8. Vorrichtung nach einem der Ansprüche 5 bis 7, **dadurch gekennzeichnet, dass** die oder jede Fixierausnehmung (17, 18) in die Längswand (2) eingebracht ist.

## Claims

1. Device for connecting at least two belts (21, 22, 26, 27) which are provided with transversely oriented connecting webs (23), comprising a base plate (1), at least one longitudinal wall (2) extending in a longitudinal direction and rising above the base plate (1), and at least one edge wall (7, 8) opposing at least one, or each, of the longitudinal walls (2) and rising above the base plate (1), **characterised in that** at least one fixing recess (17, 18) is provided which, in operation, receives at least one connecting web (23) and is introduced into the, or one, longitudinal wall (2) and/or is introduced into the, or one, edge wall (7, 8) and wherein holding-down means (13, 14, 15, 16) is provided at the, or each, longitudinal wall (2) and/or at the, or each, edge wall (7, 8) for fixing a belt (21, 22, 26, 27).

2. Device according to claim 1, **characterised in that** the holding-down means comprises a number of holding-down lugs (13, 14, 15, 16) which are provided between the, or each, longitudinal wall (2) and the, or each, edge wall (7, 8) opposing said respective longitudinal wall (2).

3. Device according to claim 1 or claim 2, **characterised in that** on the side of the, or each, longitudinal wall (2) facing away from the, or each, edge wall (7, 8), at least one longitudinal wall stiffening rib (3, 4, 5, 6) is provided.

4. Device according to one of the claims 1 to 3, **characterised in that** at least one edge wall stiffening rib (9, 10, 11, 12) is provided at the, or each, edge wall (7, 8) on the side facing away from the opposing longitudinal wall (2).

5. Device according to one of the claims 1 to 4, **characterised in that** a single longitudinal wall (2) is provided which is arranged centrally on the base plate (1).

6. Device according to one of the claims 1 to 4, **characterised in that** two longitudinal walls (2) are provided which are oriented parallel to one another.

7. Device according to claim 5 or claim 6, **characterised in that** an edge wall (7, 8) is provided, in each case, at a distance in the transverse direction of the base plate (1) from the, or each, longitudinal wall (2).

8. Device according to one of the claims 5 to 7, **characterised in that** the, or each, fixing recess (17, 18) is introduced into the longitudinal wall (2).

## Revendications

1. Dispositif d'assemblage d'au-moins deux courroies (21, 22, 26, 27) qui sont munies de pontets de liaison (23) orientés dans le plan transversal, comprenant une semelle (1), au-moins une paroi longitudinale (2) s'étendant dans le sens longitudinal et faisant saillie au-dessus de la semelle (1) ainsi qu'au-moins une paroi de rive (7, 8) disposée en face de la ou de chaque paroi longitudinale (2) et faisant saillie au-dessus de la semelle (1), **caractérisé en ce qu'**il est prévu au-moins un évidement d'immobilisation en position (17, 18), dans lequel vient se loger, dans les conditions pratiques d'utilisation du dispositif, au-moins un pontet de liaison (23), qui est ménagé dans la ou une paroi longitudinale (2) et, ou encore, dans la ou une paroi de rive (7, 8) et dans lequel il est prévu, dans la ou chaque paroi longitudinale (2) et, ou encore, dans la ou chaque paroi de rive (7, 8), des moyens de maintien en position d'application (13, 14, 15, 16) pour l'immobilisation en position d'une courroie (21, 22, 26, 27).

2. Dispositif selon la revendication 1, **caractérisé en ce que** les moyens de maintien en position d'application sont munis d'un certain nombre d'ergots de maintien en position d'application (13, 14, 15, 16), qui sont managés entre la ou chaque paroi longitudinale (2) et la ou chaque paroi de rive (7, 8) disposée en face de la paroi longitudinale (2) concernée.

3. Dispositif selon la revendication 1 ou la revendication 2, **caractérisé en ce qu'**il est prévu sur le côté de la ou de chaque paroi longitudinale (2) orienté à l'opposé de la ou de chaque paroi de rive (7, 8) au moins une nervure de renforcement de paroi longitudinale (3, 4, 5, 6).

4. Dispositif selon l'une des revendications 1 à 3, **caractérisé en ce qu'**il est prévu, au niveau de la ou de chaque paroi de rive (7, 8) sur son côté orienté à l'opposé de la paroi longitudinale (2) lui faisant face, au moins une nervure de renforcement de paroi de rive (9, 10, 11, 12).

5. Dispositif selon l'une des revendications 1 à 4, **caractérisé en ce qu'**il n'existe qu'une seule paroi longitudinale (2), qui est disposée au centre de la semelle (1).

6. Dispositif selon l'une des revendications 1 à 4, **caractérisé en ce qu'**il est prévu deux parois longitudinales (2) qui sont respectivement disposées parallèlement l'une à l'autre.

7. Dispositif selon la revendication 5 ou la revendication 6, **caractérisé en ce qu'**il est respectivement prévu, à une certaine distance, dans le plan transversal de la semelle (1), de la ou de chaque paroi longitudinale (2), une paroi de rive (7, 8).

8. Dispositif selon l'une des revendications 5 à 7, **caractérisé en ce que** le ou chaque évidement d'immobilisation en position (17, 18) est ménagé dans la paroi longitudinale (2).
